# EUROPEAN PATENT APPLICATION

(11) **EP 1 057 926 A1**
(43) Date of publication of application: **06.12.2000**
(21) Application number: 99110488.6
(22) Date of filing: 31.05.1999
(51) Int. Cl.: D21C 3/28, D21C 5/02, B01D 19/04

(54) **Foam-controlling process**

(71) Applicant: FINA RESEARCH S.A., B-7181 Seneffe (Feluy) (BE)
(72) Inventor: Inghelbrecht, Kristien Maria Johanna, 1540 Herne (BE)

(57) **Abstract**

Provided is a method for controlling foam formation, which method comprises contacting a substance with a foam-controlling agent comprising one or more of the following ester compounds (a)-(c):
(a) an ester formed from a saturated or unsaturated linear or branched aliphatic alcohol having from 1-18 carbon atoms, which alcohol may comprise one or more hydroxy groups, and a saturated or unsaturated linear or branched aliphatic monocarboxylic acid having from 6-24 carbon atoms, which carboxylic acid may be unsubstituted or substituted with one or more hydroxy groups;
(b) an ester formed by esterifying at least one of the hydroxy groups of a saturated or unsaturated linear or branched aliphatic polyol having from 2-6 carbon atoms, with a saturated or unsaturated linear or branched aliphatic monocarboxylic acid having from 6-24 carbon atoms, which carboxylic acid may be unsubstituted or substituted with one or more hydroxy groups, or by esterifying at least one of the hydroxy groups of the polyol with an oligomer formed from condensation of the monocarboxylic acid, wherein the polyol may be partially or fully esterified; and
(c) an ester formed by esterifying at least one of the hydroxy groups of a polyethyleneglycol having a molecular weight of up to 600 and/or a polypropyleneglycol having a molecular weight of up to 600, with a saturated or unsaturated linear or branched aliphatic monocarboxylic acid having from 6-24 carbon atoms, which carboxylic acid may be unsubstituted or substituted with one or more hydroxy groups, or by esterifying at least one of the hydroxy groups of the polyethyleneglycol and/or polypropyleneglycol with an oligomer formed from condensation of the monocarboxylic acid.

## Description

The present invention relates to a method for controlling the production of foam in a process. The method is particularly suitable for use in recycling processes, such as a process for removing ink from paper. The method involves the addition of a foam-controlling agent to a substance to be treated. The foam-controlling agent ensures that foam production is sufficiently high to aid in the removal of the unwanted substance, but not too high, thus preventing blockages and undesirable foam build-up. This leads to an improvement in efficiency, and reduces maintenance costs.

Many processes, including manufacturing and recycling processes, give rise to a build-up of foam as the process proceeds. This is due to agitation of the medium in which the process is carried out and is often made worse by the presence of substances which promote the formation of foam, but cannot be removed since they are essential to the process. Examples of such processes include paper manufacture and paper recycling.

It is well known to use agents such as surfactants or soap in a process for the removal of ink from waste paper to produce recycled paper. The surfactants are added to a liquid medium comprising the paper to promote the removal of ink particles from the surface of the paper to form a solution or suspension in the liquid medium. This is a typical de-inking procedure. These surfactants are the primarily responsible for the formation of foam on and in the liquid medium as the recycling process proceeds. A certain amount of foam is desirable, since it promotes the separation of ink particles from the surface of the paper. However, if too much foam is produced, this can lead to problems.

When too much foam is produced, foam knockdown showers need to be employed to remove the excess foam. This increases the quantity of water consumed by the process and is undesirable both in terms of cost and the detrimental impact on the environment. To prevent foam production causing bottlenecks in the production line, mechanical foam breakers are needed, which again increase the cost of the process and slow down production. Even if foam breakers are used they do not solve the problem of optimal production conditions. Excess foam can also lead to inconsistent ink removal and to fibre loss leading to a low recovery of the final recycled paper. Moreover in, for example, an effluent plant foam can contribute to solids carry over, which must be removed. Excess foam can additionally lead to pollution and can affect the safety of the process.

In order to overcome these problems it is known to add anti-foaming agents when carrying out a process that is subject to foaming. Particular attention has been focused on alkoxylated glycerides of fatty acids. Published patents and patent applications JP 03 000 881, JP 06 004 946, CA 2 047 182, CA 2 047 183, WO 92/07996, WO 92/07997, US 5 281 358 and JP 05 222 686 disclose the use of the above compounds as anti-foaming agents in processes for recycling paper.

In addition, JP 06 108 390 discloses the use of alkoxylated esters of mono or polycarboxylic acids and their anhydrides as anti-foaming agents. US 5,718,801 discloses sorbitan esters as an alternative anti-foaming agent.

US 2 923 687 and US 3 198 744 are both concerned with paper manufacture. They disclose the use of polyhydric alcohols, lecithin, free fatty acids and fatty acid esters of polyoxypropylated glycerol as an anti-foaming agent.

A problem with known anti-foaming agents is that they suppress foam production throughout the entire process, so that the benefits of the presence of a moderate quantity of foam are not obtained.

It is an object of the present invention to overcome the problems associated with the above prior art. Specifically, it is an object of the present invention to provide methods using foam-controlling agents with superior properties to known anti-foaming agents. It is also an object of the invention to provide methods using foam-controlling agents which suppress foam production sufficiently to avoid the problems of excess foam, and yet allow sufficient foam to be produced to aid in the process.

Accordingly, the present invention provides a method for controlling foam formation, which method comprises contacting a substance with a foam-controlling agent comprising one or more of the following ester compounds (a)-(c):
(a) an ester formed from a saturated or unsaturated linear or branched aliphatic alcohol having from 1-18 carbon atoms, which alcohol may comprise one or more hydroxy groups, and a saturated or unsaturated linear or branched aliphatic monocarboxylic acid having from 6-24 carbon atoms, which carboxylic acid may be unsubstituted or substituted with one or more hydroxy groups;
(b) an ester formed by esterifying at least one of the hydroxy groups of a saturated or unsaturated linear or branched aliphatic polyol having from 2-6 carbon atoms, with a saturated or unsaturated linear or branched aliphatic monocarboxylic acid having from 6-24 carbon atoms, which carboxylic acid may be unsubstituted or substituted with one or more hydroxy groups, or by esterifying at least one of the hydroxy groups of the polyol with an oligomer formed from condensation of the monocarboxylic acid, wherein the polyol may be partially or fully esterified; and
(c) an ester formed by esterifying at least one of the hydroxy groups of a polyethyleneglycol having a molecular weight of up to 1500 and/or a polypropyleneglycol having a molecular weight of up to 1500 and/or methoxy polyethyleneglycol having a molecular weight of 1500, with a saturated or unsaturated linear or branched aliphatic monocarboxylic acid having from 6-24 carbon atoms, which carboxylic acid may be unsubstituted or substituted with one or more hydroxy groups, or by esterifying at least one of the hydroxy groups of the polyethyleneglycol and/or polypropyleneglycol with an oligomer formed from condensation of the monocarboxylic acid.

The present invention also provides a method for de-inking paper, which method comprises:
(a) contacting the paper with a foam controlling agent as defined above; and
(b) isolating the de-inked paper.

Also provided by the present invention is the use of one or more ester compounds as defined above to control the formation of foam in a process for treating a substance.

The method of the present invention has the advantage of controlling foam formation so that the problems of excess foam formation described above are avoided. However, the agent used in the present method is not simply an anti-foaming agent, but is a foam-controlling agent. The agent is capable of controlling foam formation as the process proceeds, so that foam formation is first suppressed, but is subsequently allowed to increase. Thus the present process has the additional advantage that it is more efficient at removing unwanted substances during the process, as a result of the presence of a moderate amount of foam. An additional advantage of the present processes are that the esters of the foam controlling agent are biodegradable. Thus the present foam-controlling agents pose no significant threat to the environment.

The process of the present invention is not particularly limited, provided that it is a process which benefits from the addition of a foam-controlling agent. Preferably the process is a process carried out in an aqueous phase. The process can be a method of manufacture or a method of recycling a substance. In a preferred embodiment of the present invention the substance is a paper e.g. newspapers, magazines, books, computer printouts, coated paper, or plastics based papers. It is particularly preferred that the process is a process for manufacturing paper, or a process for recycling paper.

When the process is a process for recycling, it preferably comprises separating a substance to be recycled from an unwanted substance. In this embodiment the substance to be recycled is preferably a paper and the unwanted substance is preferably a colouring agent, an ink, a dye, or one or more substances known in the paper recycling industry as stickies.

The monocarboxylic acids used to form the esters of the present foam-controlling agent preferably comprise from 12-22 carbon atoms. The monocarboxylic acids are typically natural fatty acids, such as those that are present in rapeseed, but the acids can also be ones not found in nature. In a particularly preferred embodiment, the acids are selected from oleic acid, linoleic acid, linolenic acid, palmitoleic acid, arachidic acid, ricinoleic acid, gadoleic acid or other unsaturated acids with 20 carbon atoms, crucic acid (colza) or other unsaturated acids with 22 carbon atoms or mixtures thereof.

The aliphatic alcohols used to form esters of type (a) have from 1-18 carbon atoms and may have 1 or more hydroxyl group substituents. Preferable aliphatic alcohols for use in the present invention include, methanol, isopropanol, butanol and isobutanol.

The polyols used to form esters of type (b) have from 2-6 carbon atoms. Particularly preferred polyols include glycerol, trimethylolpropane, sorbitan, sorbitol, pentaerythritol, neopentyl glycol and mixtures thereof.

The polyethyleneglycol and polypropyleneglycol used to form the esters of type (c) typically have a molecular weight of 1500 or less. In a preferred embodiment the polyethyleneglycol and polypropyleneglycol have a molecular weight of 600 or less, more preferably 200 or less.

The method of formation of the esters used in the present method is not particularly limited. However, the esters may be produced by standard text book methods of direct esterification and/or transesterification.

The quantity of anti-foaming agent used in the methods of the present invention is not particularly limited, provided that the foam-controlling property is not adversely affected. The quantity can be determined according to the individual process involved. Typical quantities of anti-foaming agent used are from 100-1000 ppm relative to the substance to be treated when dry.

The invention will now be described in further detail by way of example only, with reference to the following specific embodiments..

### Examples

In these examples, an aqueous phase comprising pulp was employed to provide conditions similar to those found in commercial de-inking processes.

1000 g of diluted pulp representing 1 wt. % of dry matter obtained from magazines was placed in a 5000 ml vessel. The vessel was calibrated in millimetres in order to measure the foam height at various time intervals, which is a mode of measuring the degree of foaming of a system and thus the anti-foaming and foam-controlling properties of a composition.

The required quantity of foam-controlling product was added to the vessel in each test run. Since the quantity of foam-controlling agent required is very low (100-1000 ppm based on the dry pulp) it was diluted (to a 1/10 concentration) with isopropyl alcohol (IPA).

The vessel was then placed under a floatation rotor and air introduced through an air inlet at a flow rate of 10 l/min to mimic normal floatation conditions.

The process was allowed to proceed for 5 minutes, with the foam height being measured every 15 seconds.

### Example 1 - effect of concentration

The following agents were tested according to the above procedure:
(1) Pulp
(2) Pulp (1) + 0.1 wt. % non-ionic surfactant Hartaflot® SE-6600 from Huntsman Corp., Canada Inc. P.O. Box 403, Guelph, ON N1H 6KS
(2a) Pulp (2) + 140 ppm glycerol monooleic acid ester
(2b) Pulp (2) + 280 ppm glycerol monooleic acid ester
(2c) Pulp (2) + 560 ppm glycerol monooleic acid ester

The results are shown below in Table 1.

**Table 1**

| Time/s | Foam Height/mm | | | | |
|---|---|---|---|---|---|
| | Pulp 1 | Pulp 2 | Pulp 2a | Pulp 2b | Pulp 2c |
| 15 | 55 | 70 | 35 | 20 | 15 |
| 30 | 53 | 105 | 35 | 25 | 18 |
| 45 | 55 | 120 | 38 | 30 | 20 |
| 60 | 58 | 140 | 38 | 30 | 25 |
| 75 | 55 | 145 | 40 | 33 | 28 |
| 90 | 53 | 140 | 48 | 38 | 28 |
| 105 | 50 | 130 | 55 | 40 | 28 |
| 120 | 45 | 125 | 60 | 40 | 30 |
| 150 | 48 | 115 | 68 | 42 | 35 |
| 180 | 45 | 95 | 75 | 45 | 40 |
| 240 | 40 | 90 | 90 | 65 | 45 |
| 300 | 38 | 60 | 90 | 105 | 65 |

Table 1 shows that the present foam-controlling agents have a clear anti-foaming property, shown by the reduction in foam formation as compared with the system comprising a surfactant. In addition, the present agent allows a moderate quantity of foam to be present after 5 minutes.

### Example 2 - effect of ester type

The following agents were tested according to the above procedure:
(1) Pulp
(2') Pulp (1) + 0.1 % Hartaflot® SE-6600
(3) Pulp (2') + 280 ppm Paracum®-82/ES (a propoxylated ester known as an anti-foaming agent) from KOLB AG. CH-8908 Hedingen-Switzerland
(4) Pulp (2') + 280 ppm of glycerol monooleic acid ester
(5) Pulp (2') + 280 ppm of a mixture of 25 % wt. of the methyl ester of linoleic acid and 65 % wt. of the methyl ester of oleic acid
(6) Pulp (2') +280 ppm of sorbitan monooleic acid ester
(7) Pulp (2') +280 ppm of polyethylene glycol (PEG) 200 mono oleic acid ester.

The results are shown below in Table 2.

**Table 2**

| Time/s | Foam Height/mm | | | | | | |
|---|---|---|---|---|---|---|---|
| | Pulp 1 | Pulp 2' | Pulp 3 | Pulp 4 | Pulp 5 | Pulp 6 | Pulp 7 |
| 15 | 55 | 80 | 20 | 22 | 25 | 28 | 30 |
| 30 | 53 | 105 | 22 | 27 | 30 | 35 | 35 |
| 45 | 55 | 115 | 28 | 30 | 32 | 40 | 40 |
| 60 | 58 | 120 | 30 | 32 | 38 | 43 | 42 |
| 75 | 55 | 130 | 30 | 38 | 38 | 45 | 45 |
| 90 | 53 | 132 | 32 | 38 | 40 | 48 | 45 |
| 105 | 50 | 135 | 35 | 40 | 42 | 50 | 45 |
| 120 | 45 | 135 | 35 | 40 | 45 | 55 | 45 |
| 150 | 48 | 115 | 40 | 45 | 50 | 58 | 45 |
| 180 | 45 | 105 | 42 | 50 | 55 | 60 | 40 |
| 240 | 40 | 95 | 40 | 65 | 58 | 65 | 48 |
| 300 | 38 | 80 | 40 | 85 | 70 | 80 | 55 |

Table 2 shows that the present foam-controlling agents have clearly superior foam-controlling properties to the known anti-foaming agent. This can be seen from pulps 4 to 7 treated according to the present invention, where foam formation resumes after about 100 s while for the commercial anti-foam product (pulp 3) foam formation remains at a low level throughout. In addition, the present agent allows a moderate quantity of foam to be present after 5 minutes, which is not observed when using the known anti-foaming agent.

## Claims

1. A method for controlling foam formation, which method comprises contacting a substance with a foam-controlling agent comprising one or more of the following ester compounds (a)-(c):
(a) an ester formed from a saturated or unsaturated linear or branched aliphatic alcohol having from 1-18 carbon atoms, which alcohol may comprise one or more hydroxy groups, and a saturated or unsaturated linear or branched aliphatic monocarboxylic acid having from 6-24 carbon atoms, which carboxylic acid may be unsubstituted or substituted with one or more hydroxy groups;
(b) an ester formed by esterifying at least one of the hydroxy groups of a saturated or unsaturated linear or branched aliphatic polyol having from 2-6 carbon atoms, with a saturated or unsaturated linear or branched aliphatic monocarboxylic acid having from 6-24 carbon atoms, which carboxylic acid may be unsubstituted or substituted with one or more hydroxy groups, or by esterifying at least one of the hydroxy groups of the polyol with an oligomer formed from condensation of the monocarboxylic acid, wherein the polyol may be partially or fully esterified; and
(c) an ester formed by esterifying at least one of the hydroxy groups of a polyethyleneglycol having a molecular weight of up to 1500 and/or a polypropyleneglycol having a molecular weight of up to 1500 and or methoxy polyethyleneglycol having a molecular weight of 1500, with a saturated or unsaturated linear or branched aliphatic monocarboxylic acid having from 6-24 carbon atoms, which carboxylic acid may be unsubstituted or substituted with one or more hydroxy groups, or by esterifying at least one of the hydroxy groups of the polyethyleneglycol and/or polypropyleneglycol with an oligomer formed from condensation of the monocarboxylic acid.

2. A method according to claim 1, wherein the monocarboxylic acid comprises from 12-22 carbon atoms.

3. A method according to claim 1 or claim 2, wherein the monocarboxylic acid comprises an unsaturated monocarboxylic acid.

4. A method according to any preceding claim, wherein the monocarboxylic acid comprises a natural fatty acid.

5. A method according to any preceding claim, wherein the monocarboxylic acid comprises oleic acid, linoleic acid, linolenic acid, palmitoleic acid, ricinoleic acid, gadoleic acid or other unsaturated acids with 20 carbon atoms, crucic acid or other unsaturated acids with 22 carbon atoms, or mixtures thereof.

6. A method according to any preceding claim, wherein the aliphatic alcohol comprises methanol, isopropanol, butanol, isobutanol, or mixtures thereof.

7. A method according to any preceding claim, wherein the polyol comprises glycerol, trimethylolpropane, sorbitan, sorbitol, pentaerythritol, neopentyl glycol and mixtures thereof.

8. A method according to any preceding claim, wherein only one of the hydroxyl groups of the polyol is esterified.

9. A method according to any preceding claim, wherein the molecular weight of the polyethyleneglycol and/or the molecular weight of the polypropyleneglycol is 200 or less.

10. A method according to any preceding claim, wherein the substance is a paper.

11. A method of manufacturing a substance or a method of recycling a substance, which method comprises a method as defined in any preceding claim.

12. A method according to claim 11, which comprises removing a colouring agent, an ink, a dye, or one or more stickies from the substance.

13. A method for de-inking paper, which method comprises:
(a) contacting the paper with a foam-controlling agent as defined in any of claims 1-9;
(b) isolating the de-inked paper.

14. A method according to claim 13, which method further comprises contacting the paper with a de-inking agent.

15. A method according to claim 14, wherein the de-inking agent comprises a surfactant or a soap.

16. Use of one or more ester compounds as defined in any of claims 1-9 to control the formation of foam in a method for treating a substance.

17. Use according to claim 16, wherein the control comprises first suppressing foam formation, and subsequently allowing foam to be formed.

18. Use according to claim 16 or claim 17, wherein the process comprises a manufacturing or a recycling process.

19. Use according to claim 18, wherein the process comprises a process for recycling a paper.

20. Use according to claim 18 or claim 19, wherein the process is a method for de-inking a paper.

21. Use according to claim 18, wherein the process is a process for manufacturing paper.
